# EUROPEAN PATENT APPLICATION

(11) **EP 1 359 134 A1**
(43) Date of publication of application: **05.11.2003**
(21) Application number: 03380100.2
(22) Date of filing: 28.04.2003
(51) Int. Cl.: C05F 1/00, C05F 11/08, C05F 3/00, C05F 7/00, C05F 11/00

(54) **Nitrogenated fertilizer and procedure for obtaining thereof**

(30) Priority: 29.04.2002 ES 200200987
(71) Applicant: Expansion 1996, S.L., 28230 Las Rozas (Madrid) (ES)
(72) Inventor: Dominguez Rodriguez, Lucas, 28230 Las Rozas (Madrid) (ES); Sanchez-Vizcaino Rodriguez, Jose Manuel, 28230 Las Rozas (Madrid) (ES); Goyache Goni, Joaquin, 28230 Las Rozas (Madrid) (ES); Munoz Reoyo, Maria Jesus, 28230 Las Rozas (Madrid) (ES); Fernandez-Garayzabal Fernandez, Jose Francisco, 28230 Las Rozas (Madrid) (ES); Mateos Garcia, Ana, 28230 Las Rozas (Madrid) (ES); Moreno Romo, Miguel Angel, 28230 Las Rozas (Madrid) (ES); Briones Dieste, Victor, 28230 Las Rozas (Madrid) (ES); Gibello Prieto, Alicia, 28230 Las Rozas (Madrid) (ES); Blanco Gutierrez, Maria del Mar, 28230 Las Rozas (Madrid) (ES); Aranaz Martin, Alicia, 28230 Las Rozas (Madrid) (ES); Vela Alonso, Ana Isabel, 28230 Las Rozas (Madrid) (ES); Tirushet Teshager, Getahum, 28230 Las Rozas (Madrid) (ES); Las Heras Del Rio, Alfonso, 28230 Las Rozas (Madrid) (ES); De Juan Ferré, Lucia, 28230 Las Rozas (Madrid) (ES); Fernandez Riera, Elena, 28230 Las Rozas (Madrid) (ES); Porrero Calonge, Maria Concepcion, 28230 Las Rozas (Madrid) (ES); Herrero Redondo, Inmaculada Angeles, 28230 Las Rozas (Madrid) (ES); Garcia Benzaquen, Nerea, 28230 Las Rozas (Madrid) (ES)
(74) Representative: Esteban Perez-Serrano, Maria Isabel

(57) **Abstract**

Fertiliser which incorporates nitrogenated material of protein origin, such as animal-meals, being composed of nitrogenated material, plant elements and oligoelements, vitamins and minerals and, also, to which a bacterial ferment is added which produces highly active proteases and cellulases able to break down the raw materials of the fertiliser. It does not give off unpleasant odours, is highly hygroscopic and does not contain phytopathogenic agents, it is presented in granular form, or in the form of small blocks of concentrated material, in both cases dehydrated.

## Description

### OBJECT OF THE INVENTION

The objective of the present invention is both a nitrogenated fertiliser and the procedure used to obtain it. The fertiliser that corresponds to the objective of this invention also has a high content of nitrogenated organic material of protein origin, of high biological quality.

The fertiliser that is the objective of this invention is characterised by the fact that it achieves slow release fertilisation.

It is also characterised by the fact that it is produced using meal of animal origin thus preventing disposal of this animal-meal in the environment.

Another objective of this invention is the procedure required to obtain this fertiliser, either in the extruded form or in the granular form.

Therefore, the present invention can be included in the area of fertilisers, and more specifically, of fertilisers with a high contents of nitrogenated organic material of protein origin which is bound to molecules of high molecular weight and must be first hydrolysed before its components can be released to the soil.

### BACKGROUND OF THE INVENTION

Although some of the soil fertilisers used to date have a high organic matter contents, they do not use nitrogenated elements of protein origin.

On the other hand, meal produced from animal wastes, in spite of its high quality and owing to the social fear of this being a potential source of prionic infections, is not being put to good use and is currently incinerated or stored in controlled tips, neither of which is a socially acceptable solution for this product.

Since, at present, no existing fertiliser uses meal of animal origin because of the uncertainty of how to eliminate the prionic protein associated with certain diseases, the aim of this invention is to obtain a product that can use this meal transforming it into products with a high nitrogenated organic matter content and eliminating the risk of transmission of agents which constitute a health risk for man, animals and plants, as well as entailing environmental benefits.

Other drawbacks of most current organic fertilisers are:
- The presence of disagreeable aromas
- The presence of zoonotic and phytopathogenic agents
- Low water retention
- Many are rapid release fertilisers and the minerals incorporated into the soil are rapidly leached out by irrigation water or rain resulting in a need for frequent applications of fertiliser and contamination of groundwater.
- They can be toxic for the plant at high concentrations.
- Their composition is unbalanced and they do not compensate for possible existing soil deficiencies.
- Variable and uncertain composition in the different times of the year and with different sources of raw materials
- Little regeneration of micropopulations (bacteria, fungi, protozoa and metazoa).

The aim of the present invention is, therefore, to overcome these disadvantages by developing an organic fertiliser, better than currently existing ones, with a high contents of nitrogenated elements of high biological quality, which, by using a bacterial ferment to breakdown proteins, including the prionic proteins associated with diseases in some animals, which does not have a bad odour, is highly hygroscopic, incorporates a biological ferment that can slowly break down the raw materials in the fertiliser, favouring its slow uptake, has a balanced composition that permits regeneration of soil micropopulations, a low water contents that facilitates its conservation, transport and distribution, a guaranteed composition of macro and microelements and which complies with all health and environmental specifications in relation to the spread of pests and pathogens in man, animals, plants and the environment.

### DESCRIPTION OF THE INVENTION

The object of the present invention is a nitrogenated fertiliser, and the procedure used to obtain it.

The objective of the present invention is an organic fertiliser with a high contents of nitrogenated elements of protein origin that reaches up to 50% (w/w) of the final composition. Around 36% of the composition correspond to plant products and by-products and the rest are corrective vitamins, minerals and oligoelements.

Nitrogenated elements can be animal-meal, fish.-meal and soya flour to which concentrated purines and sludges from water treatment plants etc. can be added.

Around 80% of the plant products or their derivatives are composed of cellulosic material such as straw, sawdust, paper etc. and the rest of starch products such as cereals.

In order to achieve the breakdown of any prionic protein that could contain organic elements, a bacterial culture is added to the fertiliser which presents a high cellulolytic and proteolytic activity.

The biological ferment comes from bacteria isolated from the intestine of herbivores and can slowly breakdown the raw materials of the fertiliser, ensuring a slow and complete use of the fertiliser, mainly of the cellulose and protein material.

Basic nitrogenated elements are of protein origin, i.e. animal-meal, fish-meal and soya flour and flours made from other high protein plant products, especially from leguminous plants. Also, other non-protein nitrogenated products of lower biological value can be incorporated. The addition of these is important for a fertiliser since they facilitate the elimination of the more contaminant products in other applications.

The organic fertiliser with a high contents of nitrogenated elements obtained presents the following characteristics:
- It is a natural fertiliser of biological origin with a high organic matter contents, except for the vitamin-mineral corrector.
- It favours microbial activity in the surface layers and the formation of humus, favouring water retention.
- It is a highly hygroscopic fertiliser, favouring its slow biological breakdown, preventing contamination of aquifers.
- It does not contain zoonotic or agents harmful to plants or seeds.
- It incorporates a biological ferment derived from bacteria isolated from the intestine of animal herbivores capable of slowly breaking down the raw materials of the fertiliser.
- It has oligoelement and vitamin supplements to correct possible deficiencies in the soil, depending on the soil type.
- It permits regeneration of micropopulations (bacteria, fungi, protozoa and metazoa).
- It fulfils the specifications of ecological agriculture.

On the other hand, it also has the following advantages, as well as the previously mentioned ones, as a consequence of its final composition. Owing to it being a dehydrated product it can be easily stored, does not have an unpleasant odour, it does not ferment while being bagged, is dry and, after its dispersion and hydration by irrigation, can be used immediately by plants. Its presentation in a pellet or granular form favours its application and dosage.

### DESCRIPTION OF THE DRAWINGS

To complement the following description and to help understand its characteristics better, this descriptive report is accompanied by a set of plans the figures of which represent, as an example and not in a restrictive manner, the most important details of the invention.

Figure 1. This illustrates the composition of the fertiliser object of the invention.

Figure 2. This shows the steps taken in the procedure followed to obtain the fertiliser.

### PREFERRED EMBODIMENT OF THE INVENTION

In view of these figures the preferred embodiment of the invention and an explanation of the sketches is as follows:

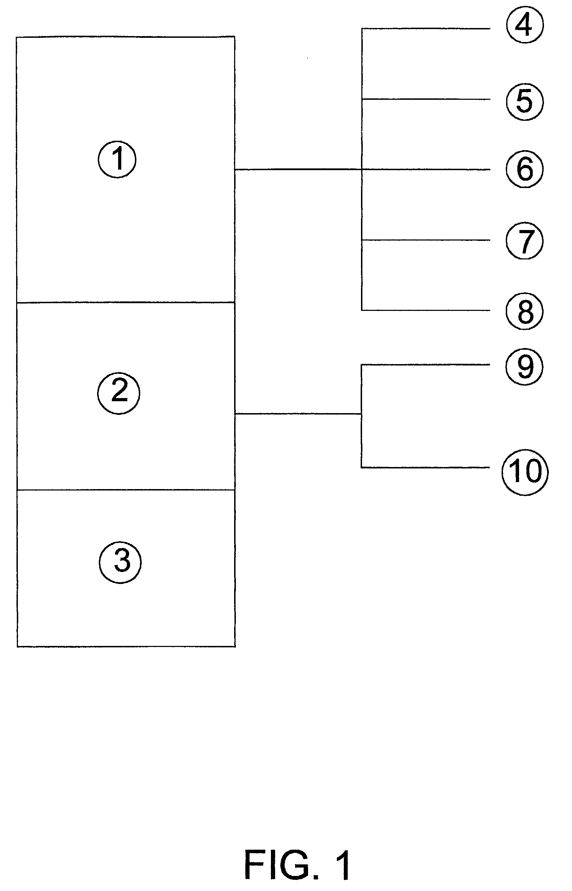

From Figure 1, the rectangle drawn is divided into three boxes. The largest rectangle represents the total 100% composition. The top box represents the nitrogenated elements mainly of protein origin (1), corresponding to around 50% of the final composition, the middle box represents plant products and by-products (2), corresponding to around 36% of the final composition and the lower box represents the mineral, vitamin and oligoelement corrector (3).

The fertiliser contains a total of organic material of around 86% which, together with the remaining oligoelements and minerals, can result in a fertiliser with optimum properties very suitable for crop use.

A binding agent can be added to the nitrogenated fertiliser object of he invention such as sepiolite or bentonite or similar compounds in amounts of up to 2%, which favour correction of the treated soil and delayed release of the fertiliser components.

The nitrogenated material of protein origin (1), can be derived from, either animal-meal (4), fish-meal (5) or soya flour (8). Also, other non-protein organic nitrogenated materials can be added such as sludges from wastewater treatment plants (6) and concentrated purines (7).

On the other hand, around 80% of the plant products (2) correspond to cellulosic material (9) (straw, sawdust, paper etc) and the rest to starch products (10)(cereals).

The fertiliser also incorporates a biological ferment obtained from bacteria isolated from the intestine of herbivores that can slowly breakdown the raw materials of the fertiliser, ensuring its gradual and full use, mainly the cellulose and the protein material.

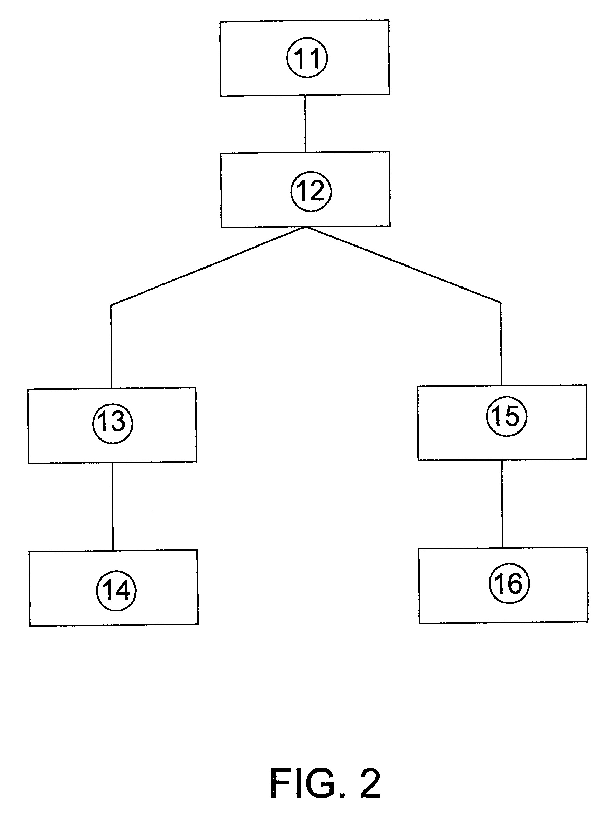

Figure 2 shows the procedure followed to produce this fertiliser, consisting of the following steps:
- Grinding all the previously specified elements to a particle size of 1mm.
- Mixing all the ingredients together.
- If the product is to be applied in granular form a bacterial ferment is added consisting of bacteria which are prolific producers of proteases and cellulases ensuring the degradation of any prionic protein existing.
- If the product is to be extruded for use in small compressed blocks or pellet form, the bacterial ferments are added after extrusion in order to minimise their inactivation by the high temperatures required for this process.

The bacterial ferment can result from directly adding the bacteria or by adding extracts or supernatants, in other words, by addition of the medium in which the bacteria are grown.

The components of the ferment can include one or some of the following:
- All the strains of *Cellulomonas biazotea* species.
- All the strains of *Oerskovia xanthineolytica* species.
- All the species of *Cellulomonas* and *Oerskovia* genera
- All the genera and species of the *Cellulomonadaceae* Family.
- All the species of the *Streptomyces* genus.
- All the bacteria that present proteolytic and/or cellulasic activity and/or extracts of these bacteria.
- All the eukaryotes (moulds, yeasts, protozoa etc.) that present this activity.

It is not considered necessary to make this description any more detailed since any expert in this field can understand the scope of the invention and the advantages that can be derived from it.

The materials, shape, size and availability of the elements can always be changed provided that this does not affect the essence of the invention.

The terms used to write this report should always be interpreted in a broad and not a restricted sense.

## Claims

1. Nitrogenated fertiliser **characterised in that** it is composed of nitrogenated elements of protein origin, of plant products and by-products rich in cellulose material and a vitamin-mineral corrector.

2. Nitrogenated fertiliser according to Claim 1, **characterised in that** the composition of nitrogenated elements represents approximately 50% of the final composition, the plant products and by-products approximately 36% of this final composition and the rest is comprised of oligoelements, vitamins and minerals.

3. Nitrogenated fertiliser, according to Claim 2, **characterised in that** the nitrogenated elements are animal-meal, fish-meal, wastewater treatment sludges, concentrated purines and soya flours.

4. Nitrogenated fertiliser, according to Claim 2, **characterised in that** the nitrogenated elements, in addition to incorporating elements of protein origin, also incorporate other non-protein nitrogenated products.

5. Nitrogenated fertiliser, according to Claim 2, **characterised in that** the plant products and by-products used in approximately 80% correspond to cellulosic material (straw, sawdust, paper) and the rest to starches (cereals).

6. Nitrogenated fertiliser, according to Claim 2, **characterised in that** a binding agent is added such as sepiolite or bentonite or a similar product in amounts of up to 2%, that favour correction of the treated soil and delayed release of its components.

7. Nitrogenated fertiliser, according to Claim 2, **characterised in that** a biological ferment made of bacteria isolated from the intestine of animal herbivores is added to the fertiliser that slowly breaks down the raw materials of the fertiliser, and where these bacteria are producers of highly active proteases and cellulases which break down any prionic protein that these animal-meals can contain.

8. Nitrogenated fertiliser, according to Claim 2, **characterised in that** the fertiliser is made of raw materials of biological origin, except for the vitamin corrector, and the fertiliser is highly hygroscopic, guaranteeing its slow biological breakdown preventing pollution of groundwater since it is a slow release fertiliser which, on the other hand, does not contain any zoonotic, phytopathogenic elements or ones harmful to seeds.

9. Nitrogenated fertiliser, according to Claim 2, **characterised in that** it is presented in granular form or extruded in small compressed blocks.

10. Nitrogenated fertiliser, according to Claim 2, **characterised in that** the ferment components include one or some of the following:
- All the strains of the *Cellulomonas biazotea* species
- All the strains of the *Oerskovia xanthineolytica* species
- All the species of the genera *Cellulomonas* and *Oerskovia.*
- All the genera and species of the family *Cellulomonadaceae.*
- All the species of the *Streptomyces* genus
- All the bacteria which present proteolytic and/or cellulosic activity, and/or extracts of these bacteria.
- All the eukaryotes (moulds, yeasts, protozoa etc.) that present this activity.

11. Nitrogenated fertiliser, according to Claim 2, **characterised in that** vitamins, oligoelements and minerals are added to the fertiliser to enable it to correct the soil composition, depending on soil type, correcting any possible deficiencies that may exist and favouring plant development.

12. Procedure to obtain the previously described nitrogenated fertiliser **characterised in that** it has the following stages:
- Grinding of all the materials (nitrogenated elements, plant elements and oligoelements, vitamins and minerals)
- Mixing these ground elements
- Addition of a bacterial ferment producer of highly active proteases and cellulases when the fertiliser is made into the granular form.
- When it is made into small compressed blocks, it is first extruded and then the bacterial ferment, producer of highly active proteases and cellulases, is added.

13. Procedure to obtain nitrogenated fertiliser, according to Claim12, **characterised in that** the ferment components are one or some of the following:
- All the strains of the species *Cellulomonas biazotea*
- All the strains of the species *Oerskovia xanthineolytica.*
- All the species of the genera *Cellulomonas* and *Oerskovia,*
- All the genera and species of the *Cellulomonodaceae* family
- All the species of the genus *Streptomyces*
- All the bacteria that present this proteolytic and/or cellulasic activity and/or extracts of these bacteria.
- All the eukaryotes (moulds, yeasts, protozoa etc.) that present this activity.

14. Procedure to obtain this nitrogenated fertiliser according to Claim 12, **characterised in that** the bacterial ferment is the result of directly adding bacteria or bacterial extracts or supernatants.
